# EUROPÄISCHE PATENTSCHRIFT

(11) **EP 1 467 620 B1**
(45) Veröffentlichungstag und Bekanntmachung des Hinweises auf die Patenterteilung: **26.05.2010**
(21) Anmeldenummer: 03702498.1
(22) Anmeldetag: 22.01.2003
(51) Int. Cl.: A01N 1/02, G01N 1/42

(54) **KRYOSPEICHEREINRICHTUNG MIT TRANSPONDER**
CRYOGENIC STORAGE DEVICE COMPRISING A TRANSPONDER
DISPOSITIF DE STOCKAGE CRYOGENIQUE POURVU D'UN TRANSPONDEUR

(30) Priorität: 22.01.2002 DE 10202304
(43) Veröffentlichungstag der Anmeldung: 20.10.2004
(73) Patentinhaber: Fraunhofer-Gesellschaft zur Förderung der angewandten Forschung e.V., 80686 München (DE)
(72) Erfinder: ZIMMERMANN, Heiko, 66113 Saarbrücken (DE); FUHR, Günter, 13187 Berlin (DE); HAGEDORN, Rolf, 13057 Berlin (DE)
(74) Vertreter: Hertz, Oliver
(86) Internationale Anmeldenummer: PCT/EP2003/000615
(87) Internationale Veröffentlichungsnummer: WO 2003/061381

(56) Entgegenhaltungen:
- EP-A- 0 974 798
- WO-A-00/33005
- DE-A- 4 418 005
- DE-A- 19 621 179

## Beschreibung

Die Erfindung betrifft Verfahren zum Betrieb einer Kryospeichereinrichtung, die zur Lagerung und/oder Konservierung von insbesondere biologischen Proben eingerichtet ist, und insbesondere Verfahren zur Datenübertragung bei der Kryospeicherung, sowie Kryospeichereinrichtungen zur Durchführung derartiger Verfahren.

Die Kryospeicherung ist eine allgemein bekannte Technik zur Lagerung und/oder Konservierung von Proben mit einer temperaturempfindlichen Lebensdauer oder Stabilität, wie zum Beispiel biologischen Proben. Je nach der konkreten Aufgabe werden tierische oder pflanzliche Produkte, Organe von Lebewesen oder Teile biologischer Systeme, wie z. B. Zellen, Zellbestandteile, Makromoleküle, Mikroorganismen, Viren, oder dgl. in einen Zustand reduzierter Temperatur überführt und gelagert. Zur Konservierung über lange Zeiträume erfolgt vorzugsweise eine Lagerung bei der Temperatur flüssigen Stickstoffs oder in einer Atmosphäre von Stickstoffdampf.

In den am Anmeldetag der vorliegenden Patentanmeldung unveröffentlichten Patentanmeldungen DE 100 60 889 und DE 101 44 925 werden Einrichtungen zur Kryospeicherung mikroskopisch kleiner biologischer Proben beschrieben. Bei diesen ist insbesondere vorgesehen, die Proben in einer Kryospeichereinrichtung jeweils gemeinsam mit Probendaten abzulegen, die für die zugehörigen Proben charakteristisch sind. Es besteht ein Interesse, die Probendaten in Datenspeichern zu lesen oder zu ergänzen, während sich die Probe im kryokonservierten Zustand befindet. Je nach dem Prinzip der Speicherung der Probedaten müssen bisher ein Datenbus-gebundener oder ein optischer Zugriff auf den Datenspeicher realisiert werden. Dies stellt ggf. einen Nachteil dar, da die Handhabbarkeit der Kryospeicherung einschränkt sein kann.

In der Datenübertragungstechnik ersetzen Transpondersysteme zunehmend die herkömmliche Identifikation von Gegenständen mittels Strichcodes. Anwendungen sind beispielsweise in der automatisierten Fertigung (Automobilindustrie), in der Überwachungstechnik (Zutrittskontrolle), in der Lebend-Tier-Identifikation oder bei der Transportweg-Verfolgung (z. B. bei Kurierdiensten) bekannt. Es sind Transponder mit den verschiedensten, auf die jeweilige Anwendung abgestimmten Bauformen bekannt (Übersicht z. B. siehe K. Finkenzeller "RFID-Handbuch", Hanser-Verlag, München, 2000).

Der Begriff Transponder benennt als Abkürzung aus "transmitter" und "responder" eine Sende- und Empfangseinrichtung, die nach einer empfangenen und ausgewerteten Anfrage eine Reaktion zeigt, z. B. eine Antwort erteilt. Allgemein umfasst ein Transponder einen Resonanzkreis und einen integrierten Schaltkreis mit einem Datenspeicher (z. B. EEPROM). Eine Datenübertragung vom Datenspeicher (Transponderspeicher) über einen drahtlosen Übertragungskanal beispielsweise zu einer zentralen Steuerung erfolgt durch Verwendung des Resonanzkreises als Sende- oder Empfangsantenne. Der Resonanzkreis ist auf eine bestimmte Sende- oder Empfangsfrequenz (z. B. 62 kHz) abgestimmt. Zur Energieversorgung insbesondere während des Schreib-/Lese-Vorganges wird der Transponder einem elektromagnetischen Wechselfeld mit einer anderen, z. B. doppelten Frequenz (z. B. 124 kHz) ausgesetzt, mit dem im Resonanzkreis ein Strom induziert wird. Transponder besitzen typischerweise eine Reichweite von rd. 80 cm. Der Schaltkreis enthält typischerweise auch einen Spannungsregler, einen Frequenzteiler und einen Codierer.

Vorteile von Transpondern bestehen in deren Miniaturisierbarkeit und Zugriffsicherheit. Es sind beispielsweise platzsparende Transponder in Folienform (sogenannte Smart-Label, wie die "Tag-It"-Transponder von Texas Instruments) bekannt. Zur Realisierung der Zugriffsicherheit sind Authentifizierungs-und Verschlüsselungsverfahren bekannt. Ein Problem von Transpondersystemen besteht aber darin, dass deren Übertragungsfunktion empfindlich von den Umgebungsbedingungen abhängig ist. Beispielsweise metallische Materialien und starke elektromagnetische Fremdfelder in der Umgebung können die Reichweite von Transpondern auf rd. 20 cm begrenzen. Aus diesem Grund ist die Verwendung von Transpondersystemen bisher auf die oben aufgezählten Aufgaben mit ausreichend gut beherrschbaren Umgebungsbedingungen beschränkt.

Die Anwendung der Transpondertechnik bei der Handhabung von biomedizinischen Verbrauchsmaterialien und deren Lagerung in einem Gefrierschrank wird in WO 00/33005 beschrieben. Des Weiteren ist bekannt, Transponder bei der labordiagnostischen Untersuchung von Blutproben zu verwenden (DE 196 21 179 A1).

Die Aufgabe der Erfindung ist es, verbesserte Verfahren bereitzustellen, mit denen die genannten Nachteile herkömmlicher Kryospeicherverfahren überwunden werden und die eine vereinfachte Handhabbarkeit und einen erweiterten Anwendungsbereich besitzen. Erfindungsgemäße Verfahren sollen insbesondere einen schnellen und sicheren Zugriff auf Probendaten unabhängig vom Betriebszustand einer Kryospeichereinrichtung ermöglichen. Die Aufgabe der Erfindung ist es auch, Vorrichtungen zur Umsetzung der Verfahren bereitzustellen.

Diese Aufgaben werden durch Verfahren und Vorrichtungen mit den Merkmalen gemäß den unabhängigen Patentansprüchen gelöst. Vorteilhafte Ausführungsformen und Anwendungen der Erfindung ergeben sich aus den abhängigen Ansprüchen.

Ein Merkmal der Erfindung ist es insbesondere, bei einem Verfahren zur Kryospeicherung insbesondere von biologischen Proben, Daten mit mindestens einem Resonanzkreis induktiv zwischen mindestens einem Datenspeicher, der an einem Probenträger zur Aufnahme mindestens einer Probe vorgesehen ist, und einem drahtlosen Übertragungskanal zu übertragen. Die erfindungsgemäß verwendete Kombination eines Datenspeichers für die Kryospeicherung mit einem Resonanzkreis löst die genannte Aufgabe vorteilhafterweise insbesondere dadurch, dass eine Vielzahl von Kryospeichereinrichtungen gleichzeitig unter Kryobedingungen betrieben und die zugehörigen Daten geschrieben und/oder gelesen werden können, ohne dass ein besonderer Anschluss der Kryospeichereinrichtungen an eine optische Übertragungsstrecke oder Busverbindung vorgesehen sein muss. Daten können im gekühlten Zustand der Probe unter Bedingungen übertragen werden, die zu den konkreten Lagerbedingungen identisch sind. Vorteilhafterweise kann die Übertragung von Daten bei Temperaturen von flüssigem Stickstoff oder vom Dampf des flüssigen Stickstoffs erfolgen. Allgemein wird der Resonanzkreis durch ein Induktionselement gebildet, über das der Datenspeicher mit dem elektromagnetischen Übertragungskanal wechselwirken kann.

Gemäß einer bevorzugten Ausführungsform der Erfindung werden die Daten mit einem Transponder übertragen, der den Datenspeicher als Transponderspeicher und den Resonanzkreis enthält. Der Erfinder hat erstmalig festgestellt, dass an sich bekannte Transponder überraschenderweise unter extremen Betriebsbedingungen wie bei der Kryokonservierung verwendbar sind. Dies gilt insbesondere für einen Betrieb bei einer Temperatur unterhalb von -60 °C oder darunter und in Kühlbehältern zur Aufnahme von Kühlmedien. Kühlbehälter sind komplex aufgebaute, oft mehrwandige Gefäße, in deren Innern erfindungsgemäß mindestens ein Transpondersystem betrieben wird. Der Transponderspeicher kann vorteilhafterweise die Funktion des Datenspeichers für Probendaten übernehmen, so dass sich der Aufbau der Kryospeichereinrichtung vereinfacht.

Besondere Vorteile in Bezug auf einen vereinfachten Aufbau ergeben sich, wenn mit dem Transponder der Datenspeicher, eine zusätzliche Datenverarbeitungseinheit und/oder ein weiteres Funktionselement der Kryospeichereinrichtung mit Energie versorgt werden. Das Funktionselement kann z. B. ein Messelement oder ein Betätigungselement zur Manipulation (Bearbeitung oder Behandlung) einer Kryoprobe sein.

Gemäß einer vorteilhaften Ausführungsform des erfindungsgemäßen Verfahrens ist der Resonanzkreis über den elektromagnetischen Übertragungskanal mit einer Übertragungsantenne verbunden, von der die Daten an eine Steuer- und Auswertungseinrichtung übertragen werden. Vorzugsweise wird eine Übertragungsantenne von einer Vielzahl erfindungsgemäßer Kryospeichereinrichtungen gemeinsam verwendet, deren Resonanzkreise auf die Übertragungsantenne abgestimmt sind. Dabei wird die Übertragungsantenne vorteilhafterweise dauerhaft oder zeitweilig im oder am Rand eines Kühlbehälters zur Aufnahme einer Vielzahl von Kryospeichereinrichtungen angeordnet.

Die erfindungsgemäß übertragenen Daten umfassen vorzugsweise Probendaten, mit denen die Probe identifiziert und charakterisiert wird, Verfahrensdaten, die für bisherige Lagerbedingungen der Probe charakteristisch sind, Steuerdaten, mit denen vorbestimmte Betriebszustände der Kryospeichereinrichtung eingestellt oder ausgelöst werden, und/oder Zusatzdaten, wie z. B. persönliche Daten und diagnostische Resultate.

Die Anwendbarkeit der Erfindung geht weit über die herkömmliche Identifizierungsfunktion von Transpondern hinaus und stellt einen wesentlichen Vorteil gegenüber herkömmlichen Transponderanwendungen dar. Es können gemäß besonderen Ausführungsformen erfindungsgemäß sogar Regelkreise implementiert werden, bei denen die Probendaten Messwerte enthalten, die an den Proben in der Kryospeichereinrichtung gewonnen worden sind, und die Steuerdaten mit der Steuer- und Auswertungseinrichtung in Abhängigkeit von den Messwerten eingestellt wird.

Ein Gegenstand der Erfindung ist auch eine Kryospeichereinrichtung, insbesondere zur Speicherung biologischer Proben im gefrorenen Zustand, die mindestens einen Probenträger zur Aufnahme mindestens einer Probe und mindestens einen Datenspeicher umfasst, wobei mindestens ein Resonanzkreis vorgesehen ist, der mit dem Datenspeicher verbunden und dazu eingerichtet ist, Daten induktiv vom Datenspeicher in einen elektromagnetischen Übertragungskanal und/oder umgekehrt zu übertragen.

Gemäß einer bevorzugten Ausführungsform der erfindungsgemäßen Kryospeichereinrichtung ist der Resonanzkreis Teil eines Transponders, der einen Datenspeicher und den Resonanzkreis umfasst. Der Datenspeicher ist ausschließlich ein Transponderspeicher, wie er von herkömmlichen Transpondern an sich bekannt ist, oder ein Datenspeicher, der beide Funktionen eines Transponderspeichers und eines Probendatenspeichers erfüllt. Der Datenspeicher kann somit vorteilhafterweise mehrere Funktionen erfüllen. Der Aufbau einer Kryospeichereinrichtung wird vereinfacht. Der Datenspeicher kann auch in eine Datenverarbeitungseinheit integriert sein, die jeweils einem Probenträger zugeordnet ist.

Ein Gegenstand der Erfindung ist auch ein Kryospeichersystem mit einer Vielzahl von Kryospeichereinrichtungen, die jeweils den genannten Aufbau besitzen. Das Kryospeichersystem ist ferner mit einer Übertragungsantenne, die gemeinsam auf alle Kryospeichereinrichtungen abgestimmt ist, und einer Steuer- und Auswertungseinrichtung ausgestattet. Zwischen der Steuer- und Auswertungseinrichtung und jeweils einem Datenspeicher sind Daten über den zugeordneten Resonanzkreis und die Übertragungsantenne übertragbar, die mit der Steuer- und Auswertungseinrichtung leitungsgebunden oder drahtlos verbunden ist. Das Kryospeichersystem ist vorzugsweise in einem thermisch isolierten Behälter zur Aufnahme eines Kühlmediums, insbesondere flüssigen Stickstoffs angeordnet.

Die Erfindung besitzt die folgenden weiteren Vorteile. Die Erfindung besitzt eine hohe Anpassungsfähigkeit an die konkrete Aufgabenstellung. Es bestehen die Möglichkeiten, (i) Proben eindeutig zu kennzeichnen (Identifikation) und die Identifizierungsinformation berührungslos auszulesen (nur Lese-Transponder), (ii) Daten direkt an oder auf der Probe zu speichern, ohne dass eine eigene leitungsgebundene Stromversorgung an der Probe erforderlich ist, und (iii) Daten berührungslos und ggf. unter Kryobedingungen lesen und schreiben zu können (Schreib-Lese-Transponder). Des Weiteren kann erstmalig eine berührungslose Stromversorgung für eine an der Kryospeichereinrichtung vorhandene Sensorik (Messeinrichtung) bereitgestellt werden (passive Transponder).

Die kontakt- oder berührungslos implementierte Datenübertragung und Energieversorgung liefert neue Vorteile, die bei früheren Anwendungen von Transpondern nicht gegeben waren. So kann der Zugriff auf die Kryoprobe mit hochfrequenten elektromagnetischen Feldern durch Schutzverpackungen (z. B. durch Folien) und thermische Isolierungen hindurch bereitgestellt werden. Die berührungslose Operation verhindert eine Lebensdauerbegrenzung durch Abnutzung, Korrosion oder Verschmutzung. Es ist eine hohe Ausfallsicherheit gegeben, so dass trotz einer ggf. hohen Anzahl von Schreib- und/oder Lesevorgängen am Datenspeicher eine Langlebigkeit der Kryoprobe im Bereich von Jahren garantiert ist. Der induktive Zugriff auf Probendaten ist insbesondere im kryokonservierten Zustand der Probe möglich.

Die berührungslose Operation vermeidet auch jeden potentiellen Heizeffekt, der durch das leitungsgebundene oder optische Einschreiben von Informationen bei herkömmlichen Techniken entstehen könnte. Die Stabilität der Kryoprobe wird erhöht.

Die Erfindung ermöglicht den Betrieb von Kryospeichersystemen mit einer großen Anzahl von Kryospeichereinrichtungen. Transponder können bei Massenfertigung mit hoher Wirtschaftlichkeit verwendet werden. Die Transpondersysteme erlauben eine hochgradig parallele Operation, was insbesondere für eine Erfassung von vielen Proben oder Suchfunktionen von Vorteil ist.

Weitere Vorteile und Einzelheiten der Erfindung werden aus der Beschreibung der beigefügten Zeichnungen ersichtlich. Es zeigen:
- Figur 1:: eine schematische Illustration einer Ausführungsform einer erfindungsgemäßen Kryospeichereinrichtung,
- Figur 2:: eine weitere Ausführungsform einer erfindungsgemäßen Kryospeichereinrichtung, und
- Figur 3:: eine schematische Illustration eines erfindungsgemäßen Kryospeichersystems mit einer Vielzahl von Kryo-speichereinrichtungen.

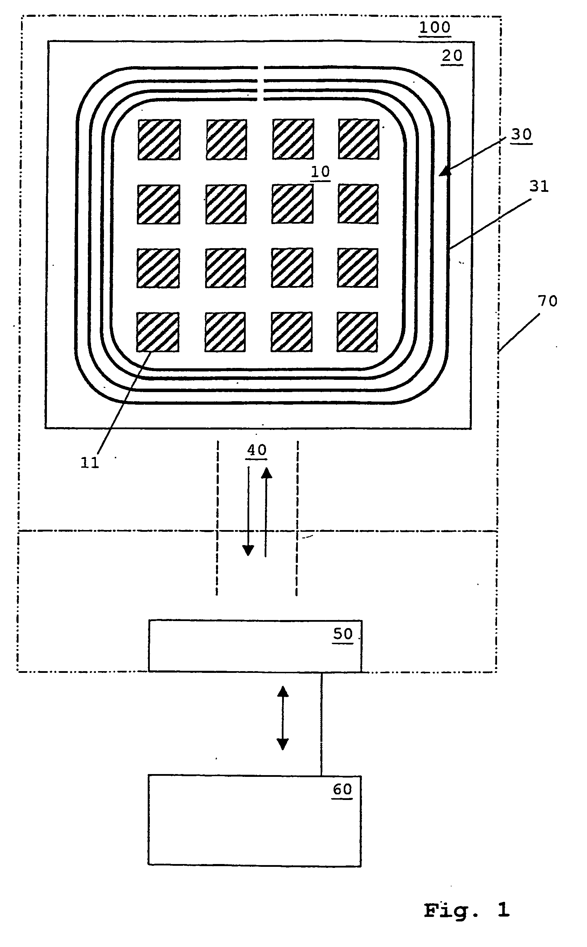

Eine erfindungsgemäße Kryospeichereinrichtung 100 umfasst gemäß der schematischen Darstellung in Figur 1 einen Probenträger 10 zur Aufnahme mindestens einer Probe 11, einen Datenspeicher 20 und einen Resonanzkreis 30, der mit dem Datenspeicher 20 und dem Probenträger 10 verbunden ist. Der Probenträger 10 ist mit dem Datenspeicher 20 verbunden, wie es beispielsweise in den oben genannten, unveröffentlichten Patentanmeldungen beschrieben ist. Die Proben 11 werden vorzugsweise durch biologische Proben gebildet. Es sind vorzugsweise miniaturisierte Proben mit charakteristischen Volumen im nl- bis µl-Bereich vorgesehen, die jeweils eine Probensuspension und biologisches Material wie z. B. Zellen, Zellbestandteile, Makromoleküle, Mikroorganismen, Viren oder dgl. enthalten. Auf dem Probenträger 10 können auch Referenzproben biologischen oder synthetischen Ursprungs vorgesehen sein.

Der Datenspeicher 20 bildet auch einen Träger für den Resonanzkreis 30, der beim dargestellten Beispiel vier Induktionsschleifen 31 umfasst, die auf das Senden und/oder Empfangen hochfrequenter elektromagnetischer Schwingungen im kHz-Bereich (oder von deren höheren Harmonischen) eingerichtet sind. Die Induktionsschleifen 31 sind mit dem Datenspeicher 20 verbunden, wie es an sich von herkömmlichen Transpondern bekannt ist.

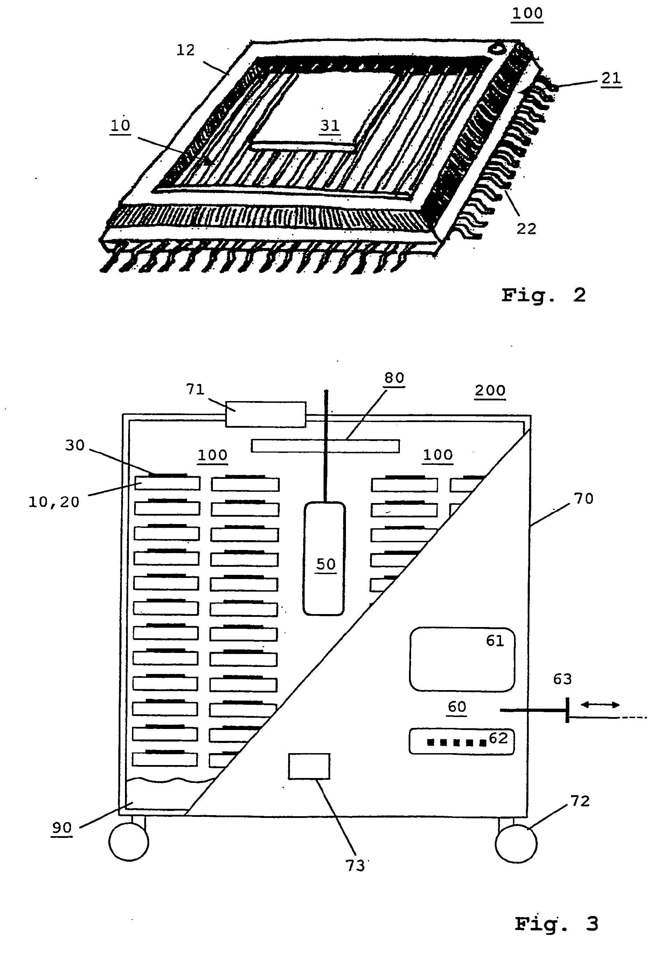

Der mindestens eine Resonanz-Frequenzbereich des Resonanzkreises 30 bildet einen Übertragungskanal 40 für hochfrequente elektromagnetische Schwingungen zur Datenübertragung zwischen der Kryospeichereinrichtung 100 und einer Übertragungsantenne 50. Die Übertragungsantenne 50 ist ihrerseits leitungsgebunden oder drahtlos mit einer Steuer- und Auswertungseinrichtung 60 verbunden oder in diese integriert. Das Bezugszeichen 70 verweist auf einen Kryobehälter, der mindestens eine Kryospeichereinrichtung 100 und ein Kühlmedium enthält und eine thermische Isolation gegenüber der Umgebung bildet. Die Übertragungsantenne 50 kann auch im Kryobehälter 70 angeordnet sein (siehe Figur 3).

Der Datenspeicher 20 ist beispielsweise ein EEPROM oder ein sog. Flash-Speicher, der zur dauerhaften Datenspeicherung eingerichtet ist, und mit einem Mikrocontroller ausgestattet. Der Datenspeicher 20 kann auch mit einer Datenverarbeitungseinrichtung kombiniert sein. Beide Komponenten können als gemeinsamer integrierter Schaltkreis bereitgestellt werden, der mit dem Probenträger 10 verbunden ist.

Die Induktionsschleifen 31 des Resonanzkreises 30 werden vorzugsweise nach dem an sich bekannten Coil-on-Chip-Verfahren als Transponderantenne direkt auf dem Halbleitermaterial des Datenspeichers 20 oder der Verkapselung eines Mikrochips integriert, der den Datenspeicher 20 und ggf. eine Datenverarbeitungseinrichtung enthält. Zur Isolation des Resonanzkreises 30 gegenüber dem Datenspeicher 20 kann eine zusätzliche Isolatorschicht vorgesehen sein. Der Probenträger 10 kann erfindungsgemäß auf einem an sich bekannten Transponder mit dem Datenspeicher 20 (Transponderspeicher) und dem Resonanzkreis 30 angeordnet sein. Abweichend von der Darstellung in Figur 1 können die Proben 11 auch neben dem Resonanzkreis 30 oder auf der entgegengesetzten Seite des Datenspeichers 20 angeordnet sein.

Weitere Einzelheiten einer erfindungsgemäßen Kryospeichereinrichtung sind beispielhaft in Figur 2 illustriert. Bei dieser Ausführungsform umfasst der Probenträger 10 schlauchförmige Kammern zur Aufnahme von Proben (siehe DE 101 44 925). Die Probenkammern sind an einem Rahmen 12 befestigt, der auf der Verkapselung eines integrierten Schaltkreises 21 befestigt oder in die Verkapselung eingearbeitet ist. Der integrierte Schaltkreis 21 enthält einen Probendatenspeicher. Auf den Probenkammern ist ein Transponder 32 mit dem Resonanzkreis und einem Datenspeicher befestigt. Bei dieser Gestaltung besteht keine Verbindung zwischen dem Transponder 32 und dem Probendatenspeicher. Der Transponder 32 dient hier ausschließlich der Identifizierung der Proben. Die Strom- und Datenversorgung des Schaltkreises 21 erfolgt hingegen über separate Anschlussleitungen 22, mit denen der Datenspeicher beispielweise in einer Fassung steckt, über die eine Verbindung mit einem Steuerkreis hergestellt wird. Alternativ kann auch eine elektrische Verbindung zwischen dem Transponder 31 und dem Schaltkreis 21 gebildet sein.

Im praktischen Einsatz werden die Kryospeichereinrichtungen 100 gemäß den Figuren 1 oder 2 entsprechend den folgenden Prinzipien verwendet. Nach einer Beschickung des Probenträgers 10 mit biologischen Proben, z. B. Zellsuspensionen, erfolgt ein Beschreiben des Probendatenspeichers, der Teil des Datenspeichers 20 ist, mit Probendaten, mit denen die Proben identifiziert und charakterisiert werden. Die Probendaten umfassen beispielsweise Messwerte, die vorab an den biologischen Proben ermittelt wurden, sowie Informationen über die Herkunft und Eigenschaften der Proben. Das Einschreiben der Daten kann bereits vor der Kryokonservierung über den Resonanzkreis 30 erfolgen. Alternativ erfolgt die Datenübertragung erst nach der Kryokonservierung.

Allgemein umfasst die Kryokonservierung die Übertragung der Kryospeichereinrichtung 100 in ein Kühlmedium reduzierter Temperatur, wie z. B. in flüssigen Stickstoff oder dessen Dampf. Die Kryospeichereinrichtung kann auch schon während der Beschickung mit Proben zumindest teilweise mit dem Kühlmedium in Kontakt sein und eine entsprechend reduzierte Temperatur aufweisen.

Im kryokonservierten Zustand wird die Kryospeichereinrichtung 100 im Kühlmedium gelagert. Die Lagerung erfolgt beispielsweise in einem Kühlbehälter 70 (siehe Figur 3). Während der Lagerung können weitere Daten auf den Datenspeicher 20 übertragen werden. Die Daten umfassen beispielsweise Verfahrensdaten, die für die Lagerbedingungen der Probe charakteristisch sind, weitere Messdaten, die am Spenderorganismus der konservierten Proben gewonnen wurden und/oder Steuerdaten. Die Verfahrensdaten umfassen beispielsweise Temperaturkennlinien, die mit Temperatursensoren im Kryobehälter oder der Umgebung erfasst und kontaktlos im Datenspeicher 20 gespeichert werden.
Die Steuerdaten enthalten beispielsweise Informationen, mit denen an der Probe vorbestimmte Mess- oder Manipulationsprozeduren ausgelöst werden können. Beispielsweise kann von außen zur Ermittlung des Lagerzustands einer Probe durch einen Startbefehl die Messung eines charakteristischen Probenparameters durchgeführt werden. Die Messung erfolgt an der kryokonservierten Probe im gefrorenen Zustand oder alternativ an einer lokal aufgetauten Teilprobe. Die jeweiligen Messwerte werden im Datenspeicher 20 gespeichert. Neben der genannten Datenübertragung hin zum Datenspeicher 20 (Schreiben) kann an der Kryospeichereinrichtung auch eine Datenübertragung in umgekehrter Richtung hin zur Auswertungs- und Steuereinrichtung 60 erfolgen (Lesen). Die Datenübertragung erfolgt vorzugsweise nach Übertragungsprotokollen, wie sie von telemetrischen Anwendungen von Transpondern an sich bekannt sind. Telemetrische Transponder basieren auf der Datenübertragung in Form elektrischer Größen (z. B. Frequenz, Phase, Amplitude), die in vorbestimmtem Zusammenhang mit den zu übertragenden Daten stehen.

Die Schreib- und Lesevorgänge können vorteilhafterweise auch in einen Rückkopplungs-Mechanismus integriert werden. Bei diesen werden zunächst Messwerte von Temperatursensoren im Datenspeicher 20 abgelegt. Die gespeicherten Daten werden in bestimmten Zeitabständen ausgelesen und zur Regelung einer externen Temperatursteuerung verwendet. Damit wird die Probe entsprechend den lokal wirkenden Lagerungsbedingungen aktiv in den Prozess der Kryokonservierung, des Abkühlens und/oder des Auftauens einbezogen. Umgekehrt können lokal ermittelte Messwerte zur Steuerung eines lokalen Auftauens von Proben oder Probenteilen entsprechend vorbestimmten Temperaturprofilen oder zur Behandlung oder Bearbeitung von Proben, ggf. im lokal aufgetauten Zustand, verwendet werden.

Mit den Steuerdaten können auch Veränderungen am Probenträger 10 bewirkt werden. Beispielsweise zur Entnahme von Teilproben werden Steuerdaten an vorbestimmte Kryospeichereinrichtungen geschickt, die eine mechanische Veränderung am Probenträger bewirken. Die mechanische Veränderung kann beispielsweise ein thermisches Ablösen eines Teils des Probenträgers umfassen. Mit den Steuerdaten können auch Diagnoseverfahren an den kryokonservierten oder lokal aufgetauten Proben ausgelöst werden.

In Figur 3 ist ein erfindungsgemäßes Kryospeichersystem 200 mit einer Vielzahl von Kryospeichereinrichtungen 100 gezeigt, die jeweils beispielsweise gemäß den in Figur 1 oder 2 gezeigten Ausführungsformen gebildet sind. Jede Kryospeichereinrichtung 100 umfasst einen Probenträger 10 mit einem Datenspeicher 20, die mit einem Resonanzkreis 30 verbunden sind. Die Kryospeichereinrichtungen 100 sind im Kühlbehälter 70 angeordnet, dessen äußere Wand aus Übersichtlichkeitsgründen nur teilweise gezeigt ist. Die Kryospeichereinrichtungen 100 sind beispielsweise in einem Regalsystem mit Fächern eingesetzt. Der Zugriff auf Kryospeichereinrichtungen 100 oder auf diesen angeordnete Proben erfolgt durch eine Schleuse 71, die in der Behälterwand vorgesehen ist. Im Kryobehälter 70 sind des Weiteren eine Übertragungsantenne 50 und eine Sensoreinrichtung 80 vorgesehen. Die Übertragungsantenne 50 ist drahtlos oder leitungsgebunden mit der Steuer- und Auswertungseinrichtung 60 verbunden, die vorzugsweise in die Wand des Kühlbehälters 70 integriert ist. Die Einrichtung 60 enthält insbesondere einen Anzeigebildschirm (vorzugsweise mit einer Dateneingabemöglichkeit, beispielsweise einem sogenannten Touchscreen-Bildschirm) und eine Signaleinrichtung 62, mit der akustisch oder optisch Betriebszustände des Kryospeichersystems 200 signalisiert werden können. Die Einrichtung 60 umfasst auch eine Schnittstelle 63, über die eine weitere drahtlose Verbindung oder Vernetzung mit einer Zentralsteuerung gebildet wird.

Die Kryokonservierung mit einem System gemäß Figur 3 erfolgt beispielsweise im Dampf flüssigen Stickstoffs. Der flüssige Stickstoff ist als Kühlmedium 90 in den Kühlbehälter 70 eingefüllt. Hierzu ist eine schematisch illustrierte Einfülleinrichtung 73 vorgesehen. Im Behältervolumen oberhalb des Kühlmediums 90 bildet sich eine Temperatur von rd. -120 °C bis - 170 °C aus. Alternativ ist auch eine Einbettung aller Kryospeichereinrichtungen 100 in das Kühlmedium 90 möglich.

Ein besonderer Vorteil der Erfindung besteht darin, dass das Kühlsystem 200 eine autarke Einheit darstellt. Der Kühlbehälter 70 ist an sich ohne dauerhaft angebrachte Anschlussleitungen betriebsfähig und beweglich. Der Kühlbehälter 70 kann beispielsweise auf Rädern 72 bewegt werden.

Die in der vorstehenden Beschreibung, den Zeichnungen und den Ansprüchen offenbarten Merkmale der Erfindung können sowohl einzeln als auch in Kombination für die Verwirklichung der Erfindung in ihren verschiedenen Ausgestaltungen von Bedeutung sein.

## Patentansprüche

1. Verfahren zum Betrieb einer Kryospeichereinrichtung (100) in einem Kryobehälter (70), insbesondere für biologische Proben, wobei
- die Kryospeichereinrichtung (100) einen Probenträger (10) zur Aufnahme mindestens einer Probe (11) und einen Datenspeicher (20) umfasst, und wobei
- Daten mit einem Resonanzkreis (30), der mit dem Datenspeicher (20) verbunden ist, induktiv vom Datenspeicher (20) in einen drahtlosen Übertragungskanal (40) und/oder umgekehrt übertragen werden,
**dadurch gekennzeichnet, dass**
- im Kryobehälter (70) als Kühlmedium (90) flüssiger Stickstoff angeordnet ist,
- die Kryospeichereinrichtung (100) im flüssigen Stickstoff oder im Dampf des flüssigen Stickstoffs angeordnet ist, und
- die Übertragung der Daten erfolgt, während die mindestens eine Probe (11) sich in einem kryokonservierten Zustand befindet.

2. Verfahren gemäß Anspruch 1, bei dem die Daten mit einem Transponder übertragen werden, der den Datenspeicher (20) und den Resonanzkreis (30) umfasst.

3. Verfahren gemäß Anspruch 1 oder 2, bei dem mit dem Resonanzkreis (30) der Datenspeicher (20) und/oder eine Datenverarbeitungseinheit mit Energie versorgt werden.

4. Verfahren gemäß einem der vorhergehenden Ansprüche, bei dem der Resonanzkreis über den Übertragungskanal (40) mit einer Übertragungsantenne (50) verbunden ist, von der die Daten an eine Steuer- und Auswertungseinrichtung (60) übertragen werden.

5. Verfahren gemäß einem der vorhergehenden Ansprüche, bei dem mit dem Resonanzkreis (30) Daten übertragen werden, die Probendaten, mit denen die Probe (11) identifiziert und charakterisiert wird, Verfahrensdaten, die für bisherige Lagerbedingungen der Probe charakteristisch sind, und/oder Steuerdaten umfassen, mit denen vorbestimmte Betriebszustände der Kryospeichereinrichtung eingestellt oder ausgelöst werden.

6. Verfahren gemäß Anspruch 5, bei dem die Probendaten Messwerte enthalten, die an den Proben oder den Kryospeichereinrichtung gewonnen worden sind, und die Steuerdaten mit der Steuer- und Auswertungseinrichtung (60) in Abhängigkeit von den Messwerten eingestellt werden.

7. Verfahren gemäß einem der vorhergehenden Ansprüche, bei dem die Übertragung von Daten bei Temperaturen im Bereich von
- 120 °C bis -170 °C erfolgt.

8. Kryospeichersystem (200), umfassend
- eine Vielzahl von Kryospeichereinrichtungen (100), insbesondere zur Kryospeicherung biologischer Proben im gefrorenen Zustand, die jeweils mindestens einen Probenträger (10) zur Aufnahme mindestens einer Probe (11) und mindestens einen Datenspeicher (20) umfassen, wobei
mindestens ein Resonanzkreis (30) vorgesehen ist, der mit dem Datenspeicher (20) verbunden und dazu eingerichtet ist, Daten induktiv vom Datenspeicher (20) in einen drahtlosen Übertragungskanal (40) und/oder umgekehrt zu übertragen, und
- einen Kryobehälter (70) mit einer Übertragungsantenne (50), in dem die Kryospeichereinrichtungen (100) angeordnet sind
**dadurch gekennzeichnet, dass**
- der Kryobehälter (70) mit einer Kühlung mit flüssigem Stickstoff oder Dampf flüssigen Stickstoffs ausgestattet ist, und
- der Kryobehälter (70) eine Steuer- und Auswertungseinrichtung (60) aufweist, wobei
- Daten zwischen dem Datenspeicher (20) und der Steuer- und Auswertungseinrichtung (60) über den Resonanzkreis (30) und die Übertragungsantenne (50) übertragbar sind.

9. Kryospeichersystem gemäß Anspruch 8, bei der der Resonanzkreis (30) Teil eines Transponders ist, der den Datenspeicher (20) und den Resonanzkreis (30) umfasst.

10. Kryospeichersystem gemäß einem der Ansprüche 8 oder 9, bei der ein gesonderter Probendatenspeicher vorgesehen ist.

11. Kryospeichersystem gemäß einem der Ansprüche 8 bis 10, die eine Datenverarbeitungseinheit enthält, in die der Datenspeicher (20) integriert ist.

## Claims

1. A method for operating a cryostorage device (100) in a cryocontainer (70), especially for biological samples, wherein
- the cryostorage device (100) comprises a sample carrier (10) to receive at least one sample (11) and a data storage (20), and wherein
- data are inductively transmitted from the data storage (20) into a wireless transmission channel (40) and/or conversely using a resonant circuit (30) connected to the data storage (20),
**characterised in that**
- liquid nitrogen is located in the cryocontainer (70) as a cooling medium (90),
- the cryostorage device (100) is located in the liquid nitrogen or in a vapour of the liquid nitrogen, and
- the data transmission takes place, while at least one sample (11) is in a cryopreserved condition.

2. The method according to claim 1, wherein the data are transmitted using a transponder which comprises the data storage (20) and the resonant circuit (30).

3. The method according to claim 1 or 2, wherein the data storage (20) and/or a data processing unit are supplied with energy using the resonant circuit (30).

4. The method according to one of the preceding claims, wherein the resonant circuit is connected via the data transmission channel (40) to a transmission antenna (50) from which the data are transmitted to a control and evaluation device (60).

5. The method according to one of the preceding claims, wherein data are transmitted using the resonant circuit (30) which comprise sample data with which the sample (11) is identified and **characterised**, process data characteristic of sample storage conditions so far, and/or control data with which pre-determined operating states of the cryostorage device are set or triggered.

6. The method according to claim 5, wherein the sample data contain measured values which have been obtained for the samples or the cryostorage device, and the control data are adjusted using the control and evaluation device (60) depending on the measured values.

7. The method according to any one of the preceding claims, wherein the data transmission takes place at temperatures in a range from - 120 °C to - 170 °C.

8. A cryostorage system (200), comprising
- a plurality of cryostorage devices (100), especially for the cryostorage of biological samples in the frozen state each of which comprising at least one sample carrier (10) to receive at least one sample (11) and at least one data storage (20), wherein
at least one resonant circuit (30) is provided which is connected to the data storage (20) and is set up to transmit data inductively from the data storage (20) into a wireless transmission channel (40) and/or conversely, and
- a cryocontainer (70) with a transmission antenna (50), wherein the cryostorage devices (100) are arranged in the cryocontainer (70),
**characterised in that**
- the cryocontainer (70) is provided with a cooling with liquid nitrogen or vapour of the liquid nitrogen, and
- the cryocontainer (70) has a control and evaluation device (60), wherein
- data can be transmitted between the data storage (20) and the control and evaluation device (60) via the resonant circuit (30) and the transmission antenna (50).

9. The cryostorage system according to claim 8, wherein the resonant circuit (30) is part of a transponder which comprises the data storage (20) and the resonant circuit (30).

10. The cryostorage system according to one of claims 8 or 9, wherein a separate sample data storage is provided.

11. The cryostorage system according to one of claims 8 to 10, which contains a data processing unit in which the data storage (20) is integrated.

## Revendications

1. Procédé de mise en oeuvre d'un dispositif de stockage cryogénique (100) dans un récipient cryogénique (70), destiné notamment à des échantillons biologiques, où
- le dispositif de stockage cryogénique (100) comprend un porte-échantillon (10) pour la réception d'au moins un échantillon (11) ainsi qu'une mémoire de données (20), et où
- des données sont transmises par un circuit résonant (30) relié à la mémoire de données (20), de manière inductive de la mémoire de données (20) vers une voie de transmission sans fil (40) et/ou inversement,
**caractérisé**
- **en ce que** de l'azote est prévu comme agent réfrigérant (90) dans le récipient cryogénique (70),
- le dispositif de stockage cryogénique (100) est disposé dans l'azote liquide ou la vapeur de l'azote liquide, et
- **en ce que** la transmission des données est effectuée alors que le ou les échantillons (11) se trouvent dans un état de cryoconservation.

2. Procédé selon la revendication 1, où les données sont transmises par un transpondeur qui comprend la mémoire de données (20) et le circuit résonant (30).

3. Procédé selon la revendication 1 ou la revendication 2, où la mémoire de données (20) et/ou une unité de traitement des données sont alimentées en courant par le circuit résonant (30).

4. Procédé selon l'une des revendications précédentes, où le circuit résonant est relié par la voie de transmission (40) à une antenne de transmission (50) au moyen de laquelle les données sont transmises à un dispositif de commande et d'analyse (60).

5. Procédé selon l'une des revendications précédentes, où des données sont transmises par le circuit résonant (30), les données d'échantillon, au moyen desquelles l'échantillon (11) est identifié et **caractérisé**, des données de processus, caractéristiques pour les conditions de stockage antérieures de l'échantillon, et/ou qui comprennent des données de commande au moyen desquelles des états de service définis du dispositif de stockage cryogénique sont réglés ou déclenchés.

6. Procédé selon la revendication 5, où les données d'échantillon comprennent des valeurs de mesure qui ont été obtenues sur les échantillons ou le dispositif de stockage cryogénique, et où les données de commande sont réglées par le dispositif de commande et d'analyse (60) en fonction des valeurs de mesure.

7. Procédé selon l'une des revendications précédentes, où la transmission de données est effectuée à des températures comprises entre -120°C et -170°C.

8. Système de stockage cryogénique (200), comprenant
- une pluralité de dispositifs de stockage cryogénique (100), destinés notamment au stockage cryogénique d'échantillons biologiques en état de congélation, lesquels comprennent chacun au moins un porte-échantillon (10) pour la réception d'au moins un échantillon (11) ainsi qu'au moins une mémoire de données (20), où
il est prévu au moins un circuit résonant (30) relié à la mémoire de données (20) et destiné à transmettre des données de manière inductive de la mémoire de données (20) vers une voie de transmission sans fil (40) et/ou inversement, ainsi
- qu'un récipient cryogénique (70) avec un refroidissement avec une antenne de transmission (50), où sont disposés les dispositifs de stockage cryogénique (100),
**caractérisé**
- **en ce que** le récipient cryogénique (70) est pourvu d'un refroidissement par azote liquide ou vapeur d'azote liquide, et
- le récipient cryogénique (70) comporte un dispositif de commande et d'analyse (60),
- des données étant transmissibles entre la mémoire de données (20) et le dispositif de commande et d'analyse (60) par le circuit résonant (30) et par l'antenne de transmission (50).

9. Système de stockage cryogénique selon la revendication 8, où le circuit résonant (30) fait partie d'un transpondeur qui comprend la mémoire de données (20) et le circuit résonant (30).

10. Système de stockage cryogénique selon l'une des revendications 8 ou 9, où il est prévu une mémoire de données d'échantillon séparée.

11. Système de stockage cryogénique selon l'une des revendications 8 à 10, comprenant une unité de traitement des données intégrée à la mémoire de données (20).
